## Europäisches Patentamt
## European Patent Office
## Office européen des brevets

(19)

(11) Veröffentlichungsnummer: **0 279 875**
**B1**

(12) **EUROPÄISCHE PATENTSCHRIFT**

(45) Veröffentlichungstag der Patentschrift:
06.06.90

(51) Int. Cl.⁵: **B60K 5/12**

(21) Anmeldenummer: **87102493.1**

(22) Anmeldetag: **21.02.87**

(54) Elastische Lagerung für ein Antriebsaggregat eines Kraftfahrzeugs.

(43) Veröffentlichungstag der Anmeldung:
31.08.88 Patentblatt 88/35

(45) Bekanntmachung des Hinweises auf die Patenterteilung:
06.06.90 Patentblatt 90/23

(84) Benannte Vertragsstaaten:
DE ES FR GB IT NL SE

(56) Entgegenhaltungen:
DE-A- 1 405 410
FR-A- 445 445
FR-A- 2 221 295
FR-A- 2 540 800
US-A- 2 084 080

(73) Patentinhaber: **Dr.Ing.h.c. F. Porsche Aktiengesellschaft, Porschestrasse 42, D-7000 Stuttgart 40(DE)**

(72) Erfinder: **von Broock, Ulrich, Dr. Dipl.-Ing., Eberdinger Strasse 58, D-7251 Weissach(DE)**

**Beschreibung**

Die Erfindung bezieht sich auf eine elastische Lagerung für ein Antriebsaggregat eines Kraftfahrzeugs nach dem Oberbegriff des Anspruchs 1.

Bei einem Kraftfahrzeug wird das Antriebsaggregat durch Fahrbahnunebenheiten zu Starrkörperschwingungen angeregt. Um die Rückwirkung dieser Schwingungen auf den Fahrkomfort zu minimieren, werden in bekannter Weise die Aggregatlager derart abgestimmt, daß die verschiedenen Schwingungsformen möglichst voneinander entkoppelt sind, z.B. so, daß Hubbewegungen von Nickbewegungen getrennt werden.

Es wurde festgestellt, daß insbesondere eine entkoppelte Hubbewegung leicht von Fahrbahnunebenheiten angeregt wird und sich nachteilig auf den Fahrkomfort auswirkt.

Die Aufgabe der Erfindung besteht darin, eine elastische Lageranordnung für ein Antriebsaggregat eines Kraftfahrzeugs zu schaffen, die durch ein günstigeres Schwingungsverhalten des Antriebsaggregats einen guten Fahrkomfort gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Der Vorteil der Erfindung besteht darin, daß ein schnelles Ruhigstellen des fremderregten Antriebsaggregates durch ein günstiges Ausschwingverhalten erzielt wird. Dieses Ausschwingverhalten wird im wesentlichen durch eine Kopplung zwischen der Hub- und Nickbewegung erreicht. Dies setzt voraus, daß

a) die Lager des Antriebsaggregats in etwa in Höhe des Schwerpunktes angeordnet sind, um weitere Eigenformen, wie z.B. Drehungen des Aggregats um andere Achsen, von den erwünschten Eigenformen zu trennen,

b) der Abstand zwischen dem oder den motorseitigen Lager(n) und dem Getriebelager möglichst groß ist, um eine hohe Frequenz der Drehbewegung um die Aggregatquerachse zu erzielen,

c) die Lager unterschiedliche Steifigkeiten aufweisen, um das erforderliche Frequenzverhältnis der beiden Eigenschwingungsformen von 1:2 zu erreichen,

d) das weiche Lager stark bedämpft ausgeführt ist.

Auch für quer eingebaute Motoren gelten die mit der Erfindung erzielten Vorteile gleichermaßen, wobei für diese Motoranordnungen jeweils nur ein Motorlager und ein Getriebelager verwendet wird.

Ein Ausführungsbeispiel der Erfindung ist in der Zeichnung dargestellt und wird im folgenden näher beschrieben.

Es zeigen

Fig. 1 eine Seitenansicht eines in Fahrzeuglängsrichtung eingebauten Antriebsaggregats mit einer Lageranordnung aus motorseitigen und getriebeseitigen Lagern,

Fig. 2 eine Ansicht auf das Antriebsaggregat in Pfeilrichtung Z der Fig. 1 gesehen,

Fig. 3 ein Schaubild über einen Ausschwingvorgang nach dem Stand der Tecknik mit voneinander entkoppelten Hub- und Nickbewegungen,

Fig. 4 ein Schaubild nach der Erfindung mit zunächst schwach gedämpften Lagern und

Fig. 5 ein Schaubild wie nach Fig. 4 aber mit stark bedämpftem Getriebelager.

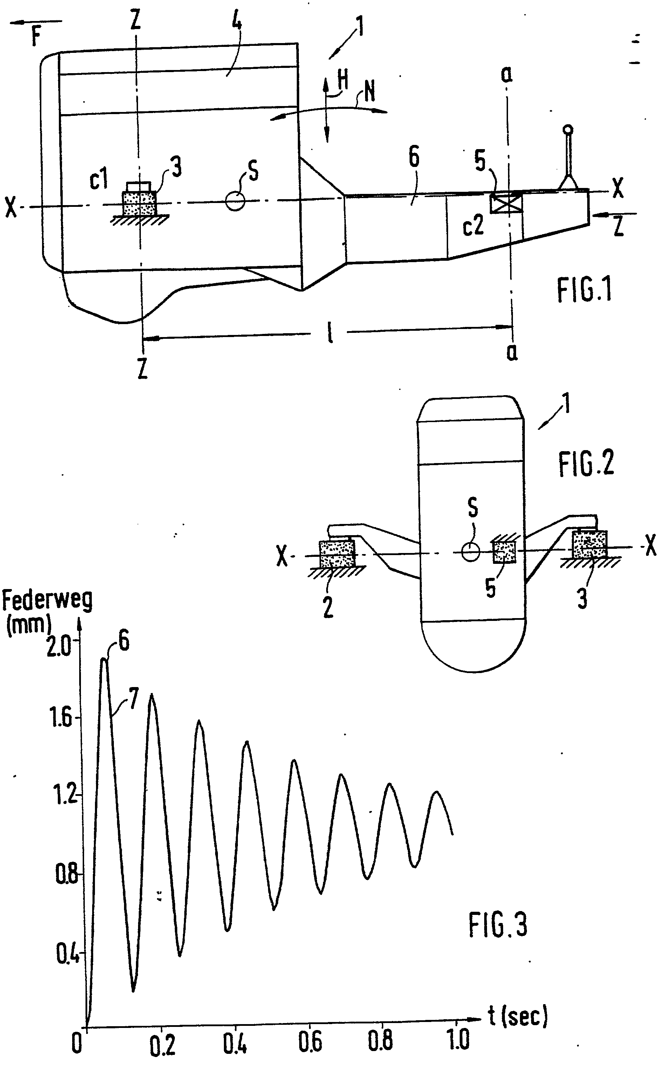

Gemäß der Fig. 1 und 2 weist ein längs eingebautes Antriebsaggregat 1 eine Lageranordnung mit zwei Lagern 2 und 3 am Motor 4 und einem Lager 5 am Getriebe 6 auf. Diese Lager 2, 3 und 5 sind in einer horizontalen Ebene X-X angeordnet, die durch den Schwerpunkt S des gesamten Aggregats verläuft. Bei einem quer eingebauten Motor ist das motorseitige Lager oberhalb des Schwerpunktes angeordnet. In Fahrtrichtung F sind die hintereinander liegenden Lager 2, 3 und S mit einem größtmöglichen Abstand 1 zueinander angeordnet. Dieser wird bestimmt vom Lagerort der Motorlager 2 und 3 im Bereich einer senkrechten Trennebene Z-Z zwischen einem ersten und zweiten Zylinder des Motors 4 und vom Lagerort des Getriebelagers 5 in einem äußersten schwingungsarmen Bereich a-a am Getriebe 6, der z.B. durch Anregung einer Biegeschwingungsform ersten Grades ermittelbar ist.

Die motorseitigen Lager 2 und 3 weisen eine andere Federsteifigkeit als das getriebeseitige Lager 5 auf. So weisen die motorseitigen Lager 2 und 3 eine größere Federsteifigkeit C1 als das getriebeseitige Lager 5 mit der Federsteifigkeit C2 auf.

Diese unterschiedlichen Federsteifigkeiten C1 und C2 der Lager 2, 3 und 5 sind derart aufeinander abgestimmt, daß sich die Schwingbewegungen des fremderregten Aggregats als gekoppelte Hub- und Nickbewegungen ausbilden, so daß eine Hubbewegung allein nicht mehr anregbar ist.

Wie im Schaubild der Fig. 3 anhand eines Ausschwingvorgangs eines Antriebsaggregats in allen Lagern dargestellt ist, sind nach dem Stand der Technik die Hubbewegungen 6 von den Nickbewegungen 7 getrennt, so daß keine gegenseitige Beeinflussung der beiden Schwingungsformen dahingehend erfolgen kann, daß der Ausschwingvorgang nach einer kurzen Zeitspanne, die auf der Abszisse aufgetragen ist, beendet wird. Auch sind bei einem solchen bekannten Ausschwingvorgang die Federwege in den Lagern, die auf der Ordinate aufgetragen sind, relativ hoch. In der gezeigten Darstellung decken sich die Kennlinien 6 und 7 für die Hub- und Nickbewegungen.

Eine geeignete Kopplung von Hub- und Nickbewegungen des Aggregats nach der Erfindung wird erzielt, wenn annähernd folgende Bedingungen vorliegen: die vorderen Motorlager 2 und 3 weisen jeweils eine Federsteife C1 von z.B. 300 N/mm und das hintere Getriebelager weist eine geringere Federsteifigkeit C2 von z.B. 80 N/mm auf. Die Motorlager 2 und 3 liegen in Höhe des Schwerpunktes 3 und weisen einen Lagerort im Bereich zwischen einer Motorstirnwand und einer Trennebene Z-Z zwischen dem ersten und dem zweiten Zylinder des Motors 4 auf. Das Getriebelager 5 ist zu den vorderen

Motorlagern 2 und 3 mit einem größtmöglichen Abstand 1 angeordnet, sollte aber aus akustischen Gründen vorzugsweise in einem schwingungsarmen Bereich liegen.

Durch diese Anordnung und Ausbildung der Lager 2, 3 und 5 weisen die bei den aus Hubbewegungen H und Nickbewegungen N entkoppelten Aggregatschwingungen Frequenzen im Verhältnis 1:2 zueinander auf.

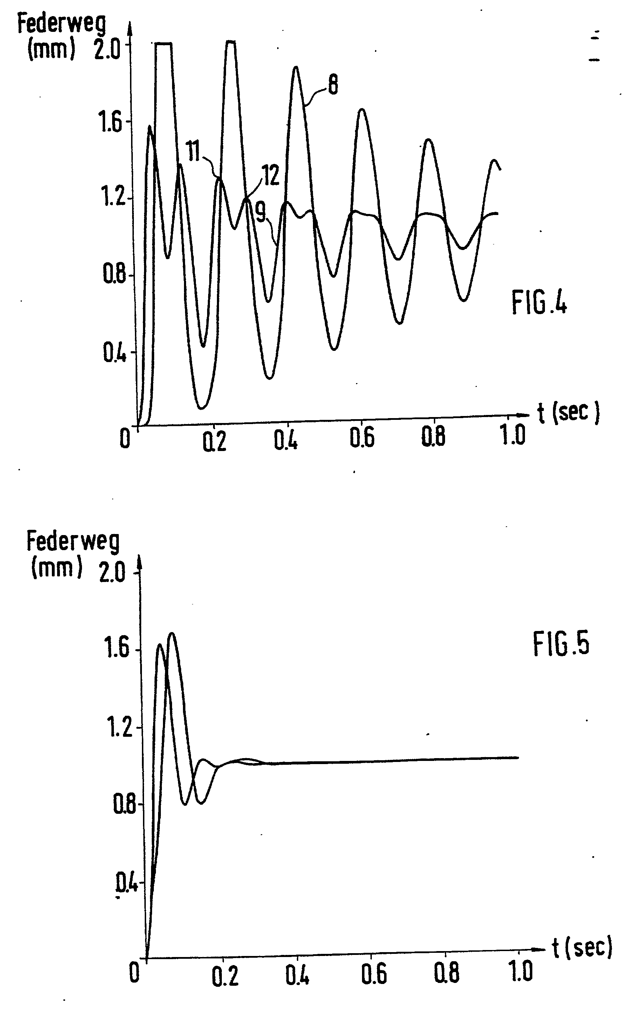

Wie im Schaubild gemäß Fig. 4 zu erkennen ist, geben die Kurven 8 und 9 das Ausschwingverhalten der aus Hub- und Nickbewegung gekoppelten Aggregatschwingung wieder. Die Ein- und Ausfederungsbewegung des Getriebelagers 5 wird durch die Kurve 8, die Ein- und Ausfederungsbewegung der Motorlager 2 und 3 durch die Kurve 9 über der Zeit dargestellt. Die Bezugszeichen 11 und 12 kennzeichnen jeweils einen max. Ausschwingungspunkt in den Lagern 2 und 3.

Wie die Kurvenlinien 8 und 9 gemäß dem Diagramm Fig. 4 weiter zeigen, wird das Ausfedern der härteren Lager, in diesem gezeigten Beispiel der Motorlager 2 und 3, durch die gekoppelte Hub- und Nickbewegung höherer Frequenz abrupt behindert.

Wird nun das Getriebelager stark bedämpft ausgeführt, z.B. durch eine hydraulische Dämpfung, kommt der Ausschwingungsvorgang schon nach kurzer Zeit zum Stillstand wie Fig. 5 zeigt.

Die Erfindung ist nicht nur anwendbar für in Fahrzeuglängsrichtung eingebaute Motoren, sondern auch anwendbar für in Fahrzeugquerrichtung eingebaute Motoren, die nicht näher dargestellt sind, wobei dann das weicher bedämpfte Lager stirnseitig am Motor angeordnet ist und mindestens ein weiteres Lager das Getriebeende hält.

## Patentansprüche

1. Elastische Lagerung für ein Antriebsaggregat eines Kraftfahrzeugs mit einer motor- und getriebeseitigen Lageranordnung, über die das Antriebsaggregat bei einem Ausschwingvorgang dämpfend gehalten wird, dadurch gekennzeichnet, daß die Lager (2, 3 und 5) des Antriebsaggregats (1) etwa in einer horizontalen Ebene (X-X) mit dem vom Antriebsaggregat (1) gebildeten Schwerpunkt (S) angeordnet sind und die motorseitigen Lager (2, 3) eine größere Federsteifigkeit (C1) aufweisen als das getriebeseitige Lager (5) mit einer Federsteifigkeit (C2), derart, daß eine Hubbewegung mit einer Nickbewegung des Aggregats (1) um eine Querachse in Nähe des Schwerpunktes (S) gekoppelt ist und diese Bewegungen Eigenfrequenzen im Verhältnis 1:2 aufweisen.

2. Lagerung nach Anspruch 1, dadurch gekennzeichnet, daß die Lager (2 und 3) des Motors in einem Bereich zwischen einer Motorstirnwand und einer zwischen dem ersten und dem zweiten Zylinder verlaufenden Trennebene (Z-Z) eines längs eingebauten Reihenmotors angeordnet sind.

3. Lagerung nach den Ansprüchen 1 oder 2, dadurch gekennzeichnet, daß das Getriebelager (5) bei einer Biegeschwingungsform ersten Grades im schwingungsarmen Bereich des Getriebes (6) mit einem größtmöglichen Abstand (1) zum Motorlager bzw. zu den Motorlagern (2 und 3) angeordnet ist.

4. Lagerung nach Anspruch 1, dadurch gekennzeichnet, daß das mit einer geringeren Federsteifigkeit ausgeführte Lager (5) aus einem hydraulisch bedämpften Lager besteht und die mit einer größeren Federsteifigkeit ausgeführten Lager (2, 3) aus bedämpften Gummilagern bestehen.

## Claims

1. A resilient mounting for a drive unit of a motor vehicle with a bearing arrangement at the side of the engine and transmission, the drive unit being held damping (sic) by way of the said bearing arrangement during free-vibration, characterized in that the bearings (2, 3 and 5) of the drive unit (1) are arranged approximately in a horizontal plane (X-X) with the centre of gravity (S) formed by the drive unit (1), and the bearings (2, 3) at the side of the engine have a greater spring stiffness (C1) than the bearing (5) at the side of the transmission with a spring stiffness (C2), in such a way that a reciprocating movement with a pitching motion of the unit (1) about a transverse axis is connected in the region of the centre of gravity (S), and these movements have characteristic frequencies in the ratio of 1:2.

2. A mounting according to Claim 1, characterized in that the bearings (2 and 3) of the engine are arranged in a region between an end wall of the engine and a separation plane (Z-Z) extending between the first and the second cylinder of a longitudinally fitted in-line engine.

3. A mounting according to Claim 1 or 2, characterized in that with a mode of bending vibration of the first degree the transmission bearing (5) is arranged in the low-vibration region of the transmission (6) at the maximum possible distance (1) from the engine bearing or bearings (2 and 3) respectively.

4. A mounting according to Claim 1, characterized in that the bearing (5) constructed with a lower spring stiffness comprises an hydraulically damped bearing, and the bearings (2, 3) constructed with a greater spring stiffness comprise damped rubber bearings.

## Revendications

1. Suspension élastique destinée au groupe moteur d'un véhicule automobile comportant un agencement de supports côté moteur et côté boîte de vitesses, par lequel le groupe moteur est maintenu amorti los d'un amortissement d'oscillations, caractérisée en ce que les supports (2, 3 et 5) du groupe moteur 1 sont disposés à peu près dans un plan horizontal (X-X) avec le centre de gravité (S) formé par le groupe moteur (1), et en ce que les supports côté moteur (2, 3) présentent une plus grande rigidité élastique (C1) que le support côté boîte de vitesse (5) avec une rigidité élastique (C2), de manière à accoupler un mouvement vertical à un mouvement en tangage du groupe (1) autour d'un axe transversal, à proximité du centre de gravité (S), et de manière que ces mouvements aient des fréquences propres d'un rapport de 1 à 2.

2. Suspension selon la revendication 1, caractérisé en ce que les supports (2 et 3) du moteur sont placés dans une région comprise entre une paroi frontale du moteur et un plan de séparation (Z-Z) d'un moteur à cylindres en ligne placé longitudinalement, passant entre le premier et le deuxième cylindre.

3. Suspension selon la revendication 1 ou 2, caractérisée en ce que le support de la boîte de vitesse (5) est disposé, dans le cas d'une forme d'oscillation en flexion du premier degré, dans la région de faible oscillation de la boîte de vitesse (6), à une distance maximale (1) du support du moteur ou des supports du moteur (2 et 3).

4. Suspension selon la revendication 1, caractérisée en ce que le support (5) présentant une rigidité élastique moindre est constitué d'un support amorti hydrauliquement et de supports (2, 3) d'une plus grande rigidité élastique, constitués de paliers en caoutchouc amortis.

FIG.1

FIG.2

FIG.3

EP 0 279 875 B1

FIG.4

FIG.5